# EUROPÄISCHE PATENTANMELDUNG

(11) **EP 1 209 105 A1**
(43) Veröffentlichungstag der Anmeldung: **29.05.2002**
(21) Anmeldenummer: 00125653.6
(22) Anmeldetag: 23.11.2000
(51) Int. Cl.: B65G 47/38

(54) **Sortierförderer mit Basismodul**

(71) Anmelder: Siemens Schweiz AG, 8047 Zürich (CH)
(72) Erfinder: Boller, Manfred, 79801 Hohentengen (DE); Maier, Willy, 5430 Wettingen (CH)
(74) Vertreter: Berg, Peter

(57) **Zusammenfassung**

Ein Sortierförderer mit einer Anzahl von Transportwagen (2,42,68), welche jeweils eine seitlich kippbare Ablageschale (6,6',44,44'), eine um eine Kippachse schwenkbare Trageinheit (4,4',46,46',76) für die Ablageschale, in Kulissen (28,28') einsteuerbare und an der Trageinheit angreifende Hebelarme (16,16'50,50',70), sowie Führungsmittel (12,20,22,56,58,78) für die Kippbewegung der Trageinheit und eine die Kippbewegung auslösende Hubbewegung der Hebelarme aufweisen.

Damit zum Kippen der Ablageschale nur einer der beiden Hebelarme nach oben oder nach unten bewegt werden muss, greifen sie an der Trageinheit auf Gleitsitz an, und sind so geführt, daß sie nur eine im wesentlichen senkrecht nach oben oder nach unten gerichtete lineare Bewegung vollführen können.

## Beschreibung

Die Erfindung bezieht sich auf einen Sortierförderer mit einer Anzahl von Transportwagen, welche seitlich kippbare Ablageschalen für zu sortierendes Stückgut aufweisen.

Ein derartiger Sortierförderer ist aus der deutschen Patentschrift DE 40 42 708 C2 bekannt. Hierin ist ein Sortierförderer beschrieben, der eine umlaufende Reihe von Trageinheiten für seitlich kippbare Ablageschalen aufweist, die entlang eines Förder-Chassis an einer Lagestation vorbeibewegt und dort mit zu sortierendem Stückgut beladen werden. Die mit Stückgut beladenen Trageinheiten werden anschliessend an einer Reihe von Entlade- oder Empfangsstationen vorbeibewegt, in denen die Ablageschalen mittels an beiden Seiten angeordneten Betätigungsarmen selektiv zum Kippen gebracht werden können, um das zu sortierenden Stückgut zu entladen. Dabei sind die Trageinheiten als Transportwagen oder -einheiten ausgebildet, die Führungsteile aufweisen, welche mit einem grösserem Abstand voneinander in das Förder-Chassis eingreifen. Die Transportwagen sind mit länglichen Antriebsteilen versehen, die sich in Vorschubrichtung der Trageinheiten erstrecken und zum Zusammenwirken mit Linearmotoren ausgelegt sind, welche in feststehenden Positionen längs des Förder-Chassis befestigt sind.

Bei dieser Art von Sortierförderen ist es bekannt, die Ablageschalen mit einer Kippeinrichtung zum Kippen zu bringen, wobei die Kippeinrichtung den Betätigungsarm über eine Nockelstösselrolle in eine Kulisse einsteuert ist, die das Kippen der Schale herbeiführt. Dabei ist es auch schon aus der europäischen Patentschrift EP 0 173 399 B1 bekannt, die Nockenstösselrolle durch eine gesteuerte Bewegung quer zur Förderrichtung in die Kulisse einzusteuern.

Damit ist der Mechanismus geschaffen, die Ablageschalen selektiv zu kippen. Das Kippen der Ablageschale wird je nach Fördergeschwindigkeit sogar noch durch das mit Beginn des Kippvorgangs nach aussen rutschende Sortiergut unterstützt, weil sich der Schwerpunkt der Ablageschale zwangläufig nach aussen zu der Entladestation hin verlagert.

Problematisch mit dem vorstehend genannten Kippförderer ist jedoch grundsätlich die Tatsache, dass die abzukippenden Stückgutteile aufgrund ihrer äusseren Beschaffenheit ganz unterschiedliche Rutscheigenschaften haben können, was im besonderen bei vergleichsweise schweren und nicht besonders gut rutschfahigen Stückgutteilen in einer erheblichen mechanischen Beanspruchung der Führungskulisse oder gar einem Zurückbewegen der Ablageschale in ihre Grundposition führen kann. Im Ergebnis ist in einem solchen Fall ein erneuter Sortierversuch oder sogar die händische Sortierung dieses Stückgutteils vorzunehmen, was die Leistung des Sortierförderers beeinträchtigt.

Dieses Problem kann gelöst werden, indem die maximal realisierbaren Kippwinkel erhöht werden. Die vergleichsweise schlecht rutschenden Stückgutteile werden dann ausreichend beschleunigt. Die ohnehin schon gut rutschenden Stückgutteile könnten dann jedoch zu schnell werden und sich möglicherweise überschlagen, wodurch die üblicherweise auf der Oberseite befindliche Adresse nach unten oder zur Seite verkehrt wird.

Dieser Nachteil könnte nun wiederum mit einer entsprechenden Ausgestaltung der Ablageschale behoben werden. Es sich somit, dass bei der Sortierung von Stückgut eine hohe Flexibilität an die Anpassung des Sortierförderers gegeben sein müsste, um bedarfsgerecht unterschiedliche Ablageschalen und Kippwinkel zu realisieren. Die aus dem Stand der Technik bekannten Sortierförderer leisten hierzu keinen Beitrag.

Der Erfindung liegt daher die Aufgabe zugrunde, einen Sortierförderer anzugeben, der besonders bedarfsgerecht bestückbar ist und auch die Sortierung von vergleichsweise schweren und nicht sonderlich gut rutschfähigen Stückgutteilen sicher und zuverlässig ausführt.

Diese Aufgabe wird bei einem Sortierförderer der eingangs genannten Art erfindungsgemäss dadurch gelöst, dass
a) die Transportwagen eine um eine Kippachse schwenkbare Trageinheit für die Ablageschalen aufweisen;
b) ein in eine Kulisse einsteuerbarer und an der Trageinheit angreifender Hebelarm vorgesehen ist;
c) die Transportwagen ein die Trageinheit aufnehmendes Basismodul umfassen; und
d) das Basismodul Führungsmittel für die Kippbewegung der Trageinheit und eine die Kippbewegung auslösende Hubbewegung des Hebelarms aufweist.

Auf diese Weise greift die Kippvorrichtung direkt an der Trageinheit an, so dass unterschiedliche Ablageschalen verwendet und ein Austausch der Ablageschalen leicht vorgenommen werden kann. Weiter wird der Druck des schwerkraftgemäss wirkenden Stückgutteils besonders gut in dem Transportwagen auffangen, weil der Hebelarm in dem mit den Führungen versehenen Basismodul geführt ist und darin auch gehalten wird. Ausserdem wird mit der Schaffung des Basismoduls ein besonders einfacher Aufbau der Transportwagen erzielt. So ist beispielsweise ein zweiteilig aufgebautes Basismodul denkbar, das aus zwei zueinander spiegelverkehrt ausgestalteten Hälften besteht, die als Führungsmittel ausgestaltete Führungsbahnen in Form von Kavitäten aufweisen und so auch die Beweglichkeit der Trageinheit und der Hebelarme in jeweils einer zweidimensionalen Ebene einschränken. Unterschiedliche Kippwinkel können einfach durch die Wahl eines entsprechenden Basismoduls erzielt werden.

In besonders vorteilhafter Nutzung dieses voranstehend beschriebenen Aufbaus des Transportwagen ist es vorgesehen, die Hebelarme und damit auch die Ablageschalen in ihrer Grund- und Kipposition zu verriegeln. Auf diese Weise ist es ermöglicht, dass die Ablageschalen sicher in ihrer Kippstellung verharren ohne dass der Kippmechanismus weiter in einer Kulisse geführt werden müsste, die bei einer Beladung mit insbesondere vergleichsweise schweren und nicht sonderlich gut rutschfähigen Stückgutteilen ansonsten vergleichsweise stark mechanisch belastet werden würde. Durch die derart verkürzte Führung in der Kulisse sind zudem die Baugrösse der Kulisse und die akustische Geräuschbelastung des Personals durch die in der Kulisse laufende Auslenkrolle vergleichsweise gering.

Ein weiterer besonderer Vorteil dieser voranstehend genannten Ausführungsform kann ausgeschöpft werden, indem der Hebelarm in einer zweidimensional verlaufenden Kulisse führbar ist, weil der Hebelarm zum Kippen der Ablageschale nur eine im wesentlich senkrecht nach oben oder nach unten gerichtete lineare Bewegung vollführen muss und hierzu im Basismodul geführt ist.

Eine weitere besonders vorteilhafte Ausgestaltung der Erfindung sieht es vor, dass der Hebelarm an der Trageinheit lagerfrei auf Gleitsitz angreift, wodurch ein zusätzliches Lager und dessen Montage entfällt.

In hierzu alternativer oder auch ergänzender Weiterbildung der Erfindung wird eine geringe Bautiefe des Sortierförderers erzielt, wenn die Ablageschalen beidseitig kippbar sind und zwei von einander unabhängig bewegbare Hebelarme vorgesehen sind, die an der Trageinheit auf Gleitsitz angreifen. Auf diese Weise wird zum Kippen nur einer der beiden Hebelarme nach oben oder unten bewegt, wobei die Trageinheit an dem anderen nicht aktivierten Hebelarm vorbeigleitet. Diese Ausgestaltungsvariante wirkt sich besonders bei aktiv nach oben stossendem Hebelarm besonders günstig aus, weil der andere Hebelarm nicht entsprechend passiv nach unten gedrückt wird und daher kein diesbezüglicher Platzbedarf für diesen ansonsten im Stand der Technik immer passiv mitbewegten Hebelarm besteht.

Ein besonderer Vorteil dieses Aufbaus ist es, dass ein maximaler Kippwinkel der Trageinheit durch eine entsprechende Ausgestaltung der Führungmittel vorgebbar ist. Auf diese Weise sind unterschiedliche Kippwinkel in einfacher Weise durch entsprechend unterschiedliche Basismodule realisierbar, wodurch die Hebelarme und die Trageinheit als solche unverändert bleiben können.

Eine konstruktiv besonders bevorzugte Ausführungsvariante sieht es nun mehr folgerichtig vor, dass der Hebelarm auskragende topfförmige Nocken aufweist und mittels dieser Nocken in einer im wesentlichen senkrecht verlaufenden Führungbahn geführt ist, wobei die Grund- und Endposition durch jeweils eine von der Führungsbahn seitlich abzweigende Aufnahme realisiert ist.

Ein die Betriebssicherheit ungemein erhöhendes Merkmal sieht es in Ausgestaltung der Erfindung vor, dass ein die Trageinheit kippender Hebelarm die Trageinheit bereits mit Beginn der Entriegelungsbewegung so verschwenkt, dass eine Entriegelungsbewegung des jeweils anderen Hebelarms blockiert ist. Eine weitere besonders betriebssichere Anlage wird erzielt, wenn eine Ergänzung des vorstehend angegebenen Merkmals dahingehend vorgesehen ist, dass die Hebelarme mittels jeweils eines in Einsteuerposition führbaren Einsteuergliedes in die Kulisse einsteuerbar sind, wobei die Einsteuerglieder - in Förderrichtung gesehen - geringfügig versetzt zueinander angeordnet sind. Auf diese Weise wird bei einem fehlerhaften Einsteuerversuch (beide Einsteuerglieder in Einsteuerposition gestellt) lediglich das in Förderrichtung gesehen nachfolgende der beiden Einsteuerglieder zerstört. Beschädigung am Transportwagen und/oder an der Kulisse werden aber auf diese Weise sicher vermieden. Damit kann der gesamte Sortierförderer bis auf diese eine dann nicht mehr oder nur noch einseitig bedienbare Zielstelle weiter betrieben werden, wodurch zu einer hohen Verfügbarkeit des Sortierförderers beigetragen wird.

Eine zu der vorstehend erläuterten Ausführung alternative Variante sieht einen zweiteiligen Aufbau des Hebelarms mit einem Hüllkörper und einem Auslenkhebel vor, wobei der Hüllkörper auf Gleitsitz an der Trageinheit angreift und im wesentlich nur in Hubrichtung beweglich ist und der Auslenkhebel im wesentlichen parallel im Hüllkörper verlaufend angeordnet ist und mit seinem der Trageinheit zugewandten oberen Ende gelenkgelagert mit dem Hüllkörper verbunden ist und mit seinem entgegengesetzten unteren Ende in die Kulisse einsteuerbar ist. Auf diese Weise ist einzigallein eine nur eindimensionale Bewegung des Hebelarms in dem Basismodul sichergestellt.

Eine besonders bevorzugte Ausführung des Kippmechanismus besteht dann darin, dass eine Kipp- und Arretierbewegung der Ablageschale erzielt ist, indem das untere Ende des Auslenkhebels zur Lösung der arretierten Grundposition innerhalb der Abmessungen des Hüllkörper in eine erste Schwenkrichtung, d.h. in eine Richtung im wesentlichen senkrecht zur Hubrichtung orientiert, schwenkbar ist, zur Erzielung der Kippbewegung in Hubrichtung bewegbar ist und zur Arretierung der gekippten Endposition in einer zweiten Schwenkrichtung, die antiparallel zur ersten Schwenkrichtung orientiert ist, schwenkbar ist.

Ohne den Austausch von Bauteilen ermöglicht der vorstehend genannte Aufbau in konstruktiv sehr einfach umzusetzender Weise auch die Realisierung ganz unterschiedlicher Kippwinkel mit Arretierung der gekippten Position, wenn das Basismodul und der Auslenkhebel zueinander korrespondierende Nocken und Aufnahmen für die Nocken aufweisen, wobei die Nocken und die Aufnahmen jeweils hintereinanderliegend in Hubrichtung angeordnet sind.

Zur Erleichterung des Auffindens der richtigen Arretierstellung kann ein Anschlag zur Begrenzung der Kippbewegung für den Hüllkörper und/oder die Trageinheit vorgesehen sein. Dabei kann die Anschlag höhenverstellbar montierbar ausgeführt sein.

Weitere vorteilhafte Ausgestaltungen der Erfindung sind den übrigen Unteransprüchen zu entnehmen.

Ausführungsbeispiele der Erfindung werden anhand einer Zeichnung näher erläutert. Dabei zeigen:
- Figur 1: in schematischer Darstellung einen ersten Transportwagen eines Sortierförderers mit einer Ablageschale in Grundposition und gekippter Position;
- Figur 2: eine Seitenansicht des Transportwagens gemäss Figur 1;
- Figur 3: in schematischer Darstellung einen zweiten Transportwagen eines Sortierförderers mit einer Ablageschale in Grundposition;
- Figur 4: den zweiten Transportwagen gemäss Figur 3 mit der Ablageschale in gekippter Position; und
- Figur 5: in schematischer Darstellung einen dritten Transportwagen eines Sortierförderers mit einer Ablageschale in gekippter Position.

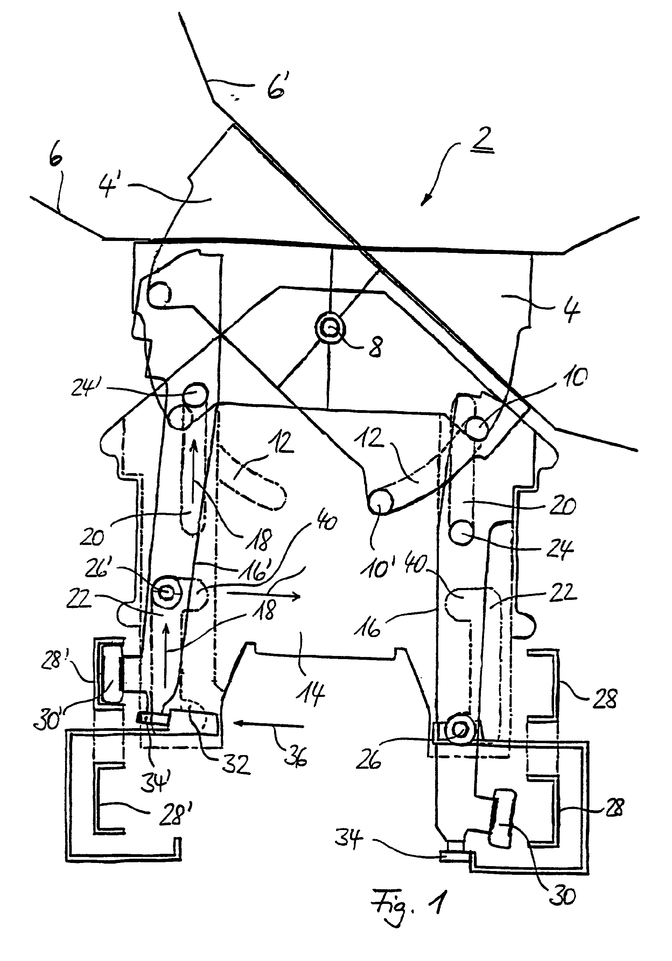

Für in den Figuren 1 bis 5 baugleiche Teile werden die gleichen Bezugszeichen verwendet. Baugleiche Teile werden in gekippter Position gegenüber den Bauteilen in Grundposition mit einem Hochkomma gekennzeichnet.

Figur 1 zeigt in schematischer Darstellung einen ersten Transportwagen 2, der Bestandteil einer umlaufenden Kette von Transportwagen eines hier nicht weiter dargestellten Sortierförderers ist. Eine Förderrichtung des Sortierförderers verläuft senkrecht zur Darstellungsebene. Der Transportwagen 2 verfügt über eine auf einer Trageinheit 4, 4' montierte Ablageschale 6, 6' zur Aufnahme von hier nicht weiter dargestellten Stückgutteilen. Die Trageinheit 4, 4' ist um eine parallel zur Förderrichtung verlaufenden Achse 8 verschwenkbar gehalten und in der Figur in nach rechts gekippter Position gezeichnet.

Dabei ist die Trageinheit 4 mit nockenförmigen Zapfen 10, 10' erst mit dem Auslenken in einer kreisbogenartigen Führungsbahn 12 geführt, welche in einem Basismodul 14 eingeformt ist. Das Basismodul 14 dient damit auch zum Tragen der Trageinheit 4 und stellt eine Verbindung zu hier nicht weiter dargestellten Antriebelementen des Sortierförderers, z.B. Linearmotoren, und den benachbarten Transportwagen dar.

Weiter werden in dem Basismodul 14 auch Hebelarme 16, 16' geführt, wobei im vorliegenden Ausführungsbeispiel der Hebelarm 16' auf der linken Seite durch eine Hubbewegung 18 das Kippen der Ablageschale 6 herbeigeführt hat. Zur Führung der Hebelarme 16, 16' sind im Basismodul 14 ebenfalls Führungsbahnen 20, 22 mit zugehörigen Zapfen 24, 24' bzw. 26, 26', die an den Hebelarmen 16, 16' angeordnet sind, vorgesehen.

Um nun das einseitige Kippen einer Ablageschale 6, 6' herbeizuführen zu können, ist es vorgesehen, den auf der jeweils anderen Seite angeordneten Hebelarm, hier den Hebelarm 6', in eine Kulisse 28, 28' einzusteuern, die im vorliegenden Ausführungsbeispiel eine nur zweidimensional gekrümmte Kurve im Raum vorgibt, der der Hebelarm 16' zu folgen hat. Zur Führung des Hebelarms 16' in der Kulisse 28, 28' verfügen die Hebelarme 16, 16' über eine reibgelagerte Nockenstösselrolle 30, 30', die mittels eines hier nicht weiter dargestellten Einsteuerelements in die Kulisse 28, 28' eingesteuert wird.

Damit der Hebelarm 16' jedoch die Hubbewegung 18 vollführen kann, muss der Hebelarm 16' zunächst aus seiner Verriegelung gelöst werden. Die Verriegelung besteht darin, dass der rollgelagerte Zapfen 26' in einer seitlich der Führungsbahn 22 gelegenen ersten Ausbuchtung 32, die Bestandteil der Führungsbahn 22 ist, in der Parkposition gelagert ist und mittels einer Ablenkrolle 34 in eine erste Schwenkrichtung 36 geschwenkt wird. Die Ablenkrolle 34 wäre auch verzichtbar, weil die Funktion der Ablenkrolle 34 bei entsprechend gestaltetem Einsteuerelement auch durch ein Angriff an der Nöckenstösselrolle direkt erzielt werden kann. Die erste Schwenkrichtung 36 ist dabei im wesentlich senkrecht zur Hubbewegung 18 orientiert. Die erste Schwenkbewegung vollzieht sich dabei um die Achse des Zapfens 24'. Anschliessend folgt die Hubbewegung 18 mit dem Kippen der Trageinheit 4' und der Ablageschale 6'. In diesem Status befindet sich die gezeigte Kippbewegung. Zur Verriegelung der gekippten Position folgt abschliessend eine Bewegung in eine zweite Schwenkrichtung 38 antiparallel zur ersten Schwenkrichtung 36. Der rollgelagerte Zapfen 26' ruht dann in einer zweiten Ausbuchtung 40 seitlich am Ende des senkrecht aufsteigenden Abschnitts der Führungsbahn 22 und kann nicht mehr direkt nach unten oder oben gedrückt werden. Damit ist sichergestellt, dass die Ablageschale 6' dauerhaft in der gekippten Position verharrt bis der Transportwagen 2 eine hier nicht weiter dargestellte Rückstellkulisse passiert und eine umgekehrte Bewegungsabfolge des Hebelarms 16' erzielt ist.

Die Übertragung der Hubbeweung 18 vom Hebelarm 16' auf die Trageinheit 4' wird durch einen Gleitsitz des Hebelarms 16' an einem Gegenlager der Trageinheit 4' herbeigeführt. Auf diese Weise wird daher der andere Hebelarm 16 nicht mitbewegt, wodurch der nach unten benötigte Platzaufwand ganz erheblich gegenüber einem mit nach unten schwenkenden Hebelarm verringert ist. Weiter wird mit dem Beginn der Hubbewegung 18 zugleich die Trageinheit 4' so verschwenkt, dass eine Hubbewegung des Hebelarm 16 blockiert ist. Durch die Länge der Führungsbahnen 20, 22 und den Kreisbogenausschnitt der Führungsbahn 12 lässt sich zudem der gewünschte Kippwinkel in weiten Grenzen einstellen. Dabei können die Trageinheit 4, 4' und die Hebelarme 16, 16' unverändert bleiben.

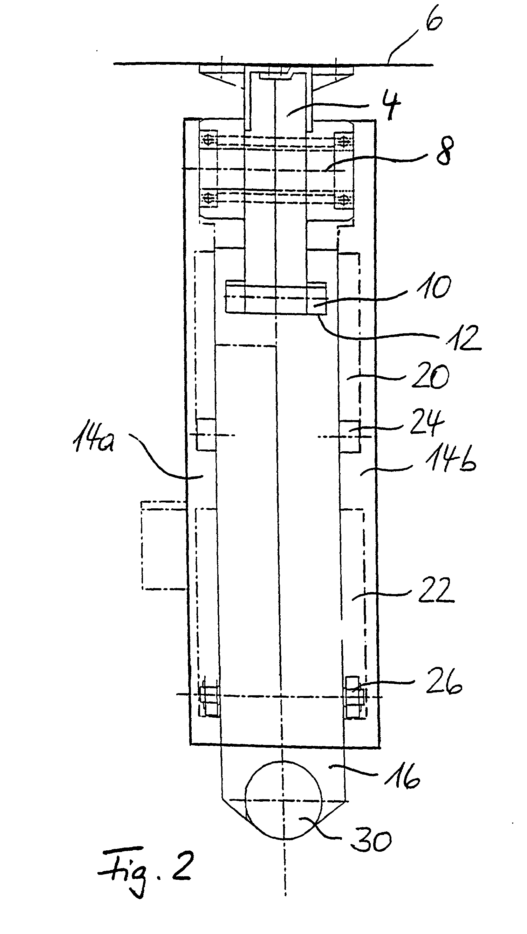

Figur 2 zeigt eine seitliche Ansicht des Transportwagens 2. In dieser Ansicht wird besonders deutlich, dass das Basismodul 14 zwei zueinander spiegelbildlich ausgestaltete Teile 14a, 14b umfasst. Auf diese Weise werden die Trageinheit 4 und die Hebelarme 16 besonders gut in den innenliegenden Führungsbahnen 12, 20, 22 geführt.

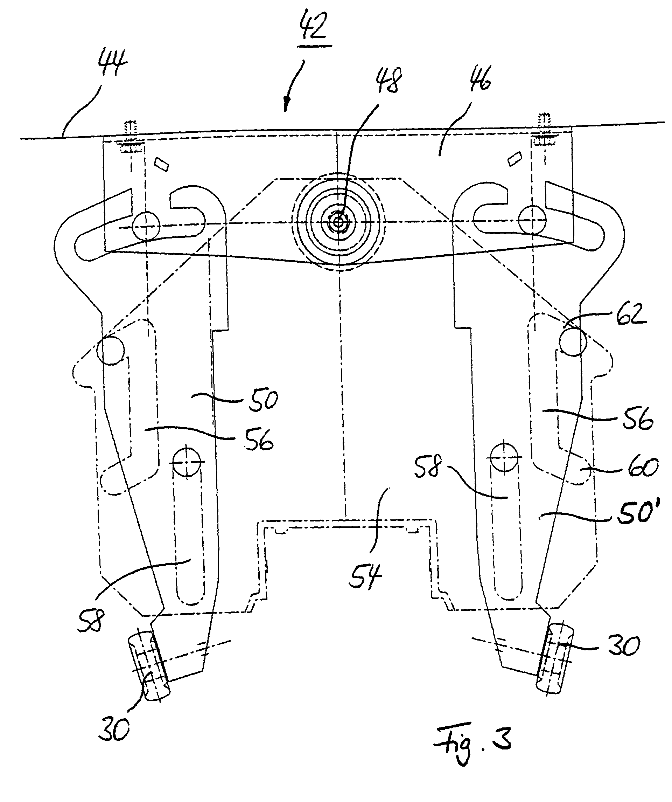

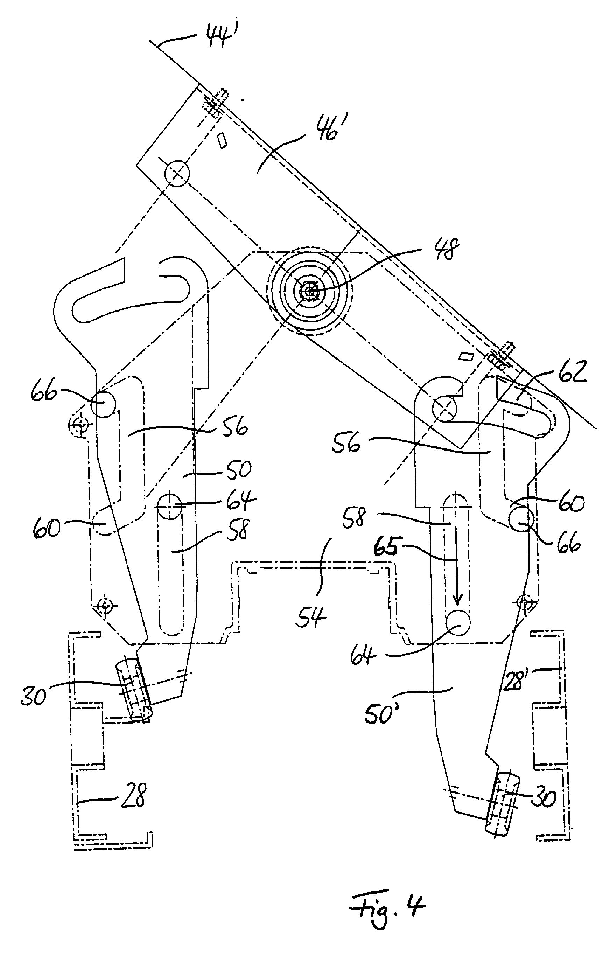

Figur 3 zeigt einen zweiten Transportwagen 42 eines hier nicht weiter dargestellten Sortierförderers, bei dem ebenfalls eine eine Ablageschale 44 tragende Trageinheit 46 vorgesehen ist, die um eine Achse 48 drehbar gelagert ist. Die Trageinheit 46 und Hebelarme 50, 50' sind wiederum in einem Basismodul 54 gehalten. Zur Führung der Hebelarme 50, 50' sind in dem Basismodul 54 ebenfalls Führungsbahnen 56, 58 vorgesehen, wobei die Führungsbahnen 56 über jeweils zwei Ausbuchtungen 60, 62 verfügen. Dabei dient die obere Ausbuchtung 62 der Verriegelung der Grundposition der Ablageschale 44. Entsprechend dient die untere Ausbuchtung 60 der Verriegelung der gekippten Position, wie dies in Figur 4 gezeigt ist. Die Hebelarme 50, 50' verfügen zudem über nockenförmige Zapfen 64, 66, mittels derer die Führung in den Führungsbahnen 56, 58 erzielt ist.

Wie aus der Figur 4 ersichtlich ist, besteht der Unterschied dieses Ausführungsbeispiels im Vergleich zu dem vorangehenden Ausführungsbeispiel gemäss den Figuren 1 und 2 darin, dass die Trageinheit 46 nicht durch eine Stossbewegung nach oben (Hubbewegung 18), sondern durch eine Ziehbewegung nach unten (Hubbewegung 65). Die übrige Vorgehensweise zur Ent- und Verriegelung der beiden Positionen der Ablageschale 44 wurde auch in diesem Ausführungsbeispiel übernommen. Konkret ist auch hier - wie bereits vorstehend erläutert - eine Bewegung des Schwenkarms 50' an seiner in die Kulisse 28' einsteuerbaren Nockenstösselrolle 30' in erster und zweiter Schwenkrichtung 36 bzw. 38 vorgesehen. Auch bei diesem Ausführungsbeispiel wird für die Kippbewegung nur einer der beiden Hebelarme 50, 50' bewegt.

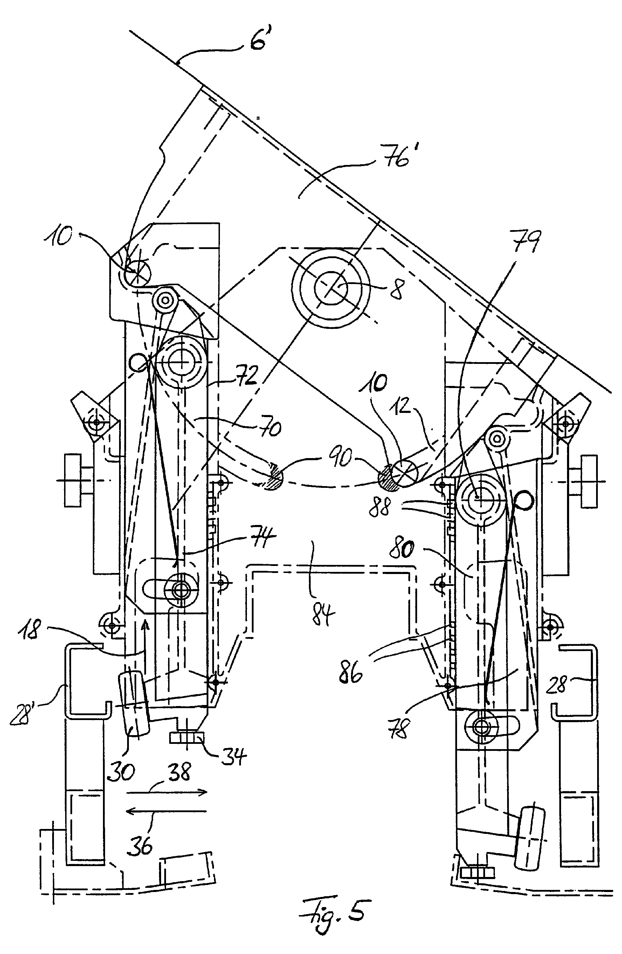

Figur 5 zeigt einen dritten Transportwagen 68, bei dem im Gegensatz zu den vorangehenden Ausführungsbeispielen ein zweiteilig aufgebauter Hebelarm 70 mit einem modifizierten Funktionsmechanismus eingesetzt ist. Alle übrigen Funktionsmechanismen entsprechen denen der zu den beiden vorangegangenen Ausführungsbeispielen erläuterten Prinzipien.

Der Hebelarm 70 verfügt über einen Hüllkörper 72 und eine Schwenkstange 74. Dabei greift der Hüllkörper 72 auf Gleitsitz an einer Trageinheit 76' für die Ablageschale 6, 6' an und ist im wesentlich nur in Hubrichtung 18 beweglich. Die Schwenkstange 74 ist im Hüllkörper 72 verlaufend angeordnet. Das der Trageinheit 76 zugewandten oberen Ende ist in einem Lager 79 drehbar gelagert mit dem Hüllkörper 72 verbunden; das entgegengesetzte untere Ende mit der Nockenstösselrolle 30 in die Kulisse 28, 28' einsteuerbar.

Die Kipp- und Arretierbewegung der Ablageschale 6, 6' wird im vorliegenden Ausführungsbeispiel erzielt, indem das untere Ende der Schwenkstange 74 zur Lösung der arretierten Grundposition innerhalb der Abmessungen des Hüllkörper 72 in die erste Schwenkrichtung 36 schwenkt wird. Durch diese Schwenkbewegung wird der rollengelagerte Zapfen 26, 26' aus einer ersten seitlich einer sich senkrecht erstreckenden Führungsbahn 78 befindlichen Ausbuchtung 80 herausbewegt und ist anschliessend zur Erzielung der Kippbewegung in Hubrichtung 18 zusammen mit dem Hüllelement 72 bewegt worden. Zur Arretierung der gekippten Endposition ist die Schwenkstange 74 in der zweiten Schwenkrichtung 38, die antiparallel zur ersten Schwenkrichtung 36 orientiert ist, in eine zweite Ausbuchtung 82 verschwenkt worden.

Eine Besonderheit dieses Ausführungsbeispiels besteht darin, dass der erzielbare Kippwinkel in gewissen Grenzen variabel einstellbar ist. Hierzu weist ein den Hüllkörper 72 und die Trageinheit 76 führendes Basismodul 84 und die Schwenkstange 74 zueinander korrespondierende Nocken 86 und Aufnahmen 88 für die Nocken 86 aufweisen, wobei die Nocken 86 und die Aufnahmen 88 jeweils hintereinanderliegend in Hubrichtung 18 angeordnet sind.

Um das Auffinden der gewünschten Position von Nocken 86 und Aufnahmen 88 relativ zueinander zu erleichtern, was aufgrund der vergleichsweise feinen Rasterung sensibel sein kann, ist ein Anschlag 90 zur Begrenzung der Kippbewegung für die Trageinheit 76 vorgesehen. Dieser Anschlag 90 ist vorliegend als Einlegeteil realisiert, welches in die Führungsbahn 12 einlegbar ist, in welcher die Trageinheit 76 mit ihren Zapfen 10 geführt ist. Alternativ kann der Anschlag 90 auch für den Hüllkörper 72 zur Begrenzung seiner Hubbewegung 18 vorgesehen sein. Dies hätte zudem den Vorteil, dass eine Einstellung des maximalen Kippwinkels bei einem höhenverstellbar ausgestalteten Anschlag 90 von aussen vorgenommen werden könnte. Eine weitere alternative Möglichkeit besteht darin, die Ablageschale im Laufe der Kippbewegung an einen Anschlag stossen zu lassen. Dabei kann die Position dieses Anschlags selbst wiederum beispielsweise mittels einer Kulisse eingestellt werden. Dadurch können innerhalb eines Sortierförderers mit ein und demselben Transportwagen unterschiedliche, dem aktuellen Bedarf anpassbare Kippwinkel realisiert werden.

### Bezugszeichenliste

- 2: erster Transportwagen
- 4, 4': Trageinheit
- 6, 6': Ablageschale
- 8: Achse
- 10, 10': Zapfen
- 12: Führungsbahn
- 14: Basismodul
- 14a, 14b: Basismodulteile
- 16, 16': Hebelarme
- 18: Hubbewegung
- 20, 22: Führungsbahnen
- 24, 24': Zapfen
- 26, 26': rollengelagerte Zapfen
- 28, 28': Kulisse
- 30, 30': Nockenstösselrolle
- 32: erste Ausbuchtung
- 34: Ablenkrolle
- 36: erste Schwenkrichtung
- 38: zweite Schwenkrichtung
- 40: zweite Ausbuchtung
- 42: zweiter Transportwagen
- 44: Ablageschale
- 46: Trageinheit
- 48: Achse
- 50, 50': Hebelarme
- 54: Basismodul
- 56, 58: Führungsbahnen
- 60, 62: Ausbuchtungen
- 64, 66: nockenförmige Zapfen
- 65: Hubbewegung
- 68: dritter Transportwagen
- 70: Hebelarm
- 72: Hüllkörper
- 74: Auslenkhebel
- 76: Tragstange
- 78: Führungsbahn
- 79: Lager
- 80: erste Ausbuchtung
- 82: zweite Ausbuchtung
- 84: Basismodul
- 86: Nocken
- 88: Aufnahmen
- 90: Anschlag

## Patentansprüche

1. Sortierförderer mit einer Anzahl von Transportwagen (2, 42, 68), welche seitlich kippbare Ablageschalen (6, 6', 44, 44') für zu sortierendes Stückgut aufweisen, wobei
a) die Transportwagen (2, 42, 68) eine um eine Kippachse schwenkbare Trageinheit (4, 4', 46, 46', 76) für die Ablageschale (6, 6', 44, 44') aufweisen;
b) ein in eine Kulisse (28, 28') einsteuerbarer und an der Trageinheit (4, 4', 46, 46', 76) angreifender Hebelarm (16, 16', 50, 50', 70) vorgesehen ist;
c) die Transportwagen (2, 42, 68) ein die Trageinheit (4, 4', 46, 46', 76) aufnehmendes Basismodul (14, 54, 84) umfassen; und
d) das Basismodul (14, 54, 84) Führungsmittel (12, 20, 22, 56, 58, 78) für die Kippbewegung der Trageinheit (4, 4', 46, 46', 76) und eine die Kippbewegung auslösende Hubbewegung des Hebelarms (16, 16', 50, 50', 70) aufweist.

2. Sortierförderer nach Anspruch 1,
**dadurch gekennzeichnet, dass**
die Ablageschalen (6, 6', 44, 44') in ihrer Grundposition und in ihrer gekippten Endposition arretierbar gehalten sind.

3. Sortierförderer nach Anspruch 2,
**dadurch gekennzeichnet, dass**
der Hebelarm (16, 16', 50, 50', 70) zur Verriegelung in eine Richtung (36, 38) im wesentlichen senkrecht zur Hubrichtung (18) führbar ist.

4. Sortierförderer nach einem der Ansprüche 1 bis 3,
**dadurch gekennzeichnet, dass**
der Hebelarm (16, 16', 50, 50', 70) in einer zweidimensional verlaufenden Kulisse (28, 28') führbar.

5. Sortierförderer nach einem der Ansprüche 1 bis 4,
**dadurch gekennzeichnet, dass**
der Hebelarm (16, 16', 50, 50', 70) an der Trageinheit (4, 4', 46, 46', 76) lagerfrei auf Gleitsitz angreift.

6. Sortierförderer nach einem der Ansprüche 1 bis 5,
**dadurch gekennzeichnet, dass**
die Ablageschalen (6, 6', 44, 44') beidseitig kippbar sind und zwei von einander unabhängig bewegbare Hebelarme (16, 16', 50, 50', 70) vorgesehen sind, die an der Trageinheit (4, 4', 46, 46', 76) auf Gleitsitz angreifen.

7. Sortierförderer nach einem der Ansprüche 1 bis 6,
**dadurch gekennzeichnet, dass**
im Basismodul (14, 54, 84) als Führungsmittel Führungsbahnen (12, 20, 22, 56, 58, 78) für die Kippbewegung der Trageinheit (4, 4', 46, 46', 76) und die Hub- und Arretierbewegung der Hebelarme (16, 16', 50, 50', 70) vorgesehen sind.

8. Sortierförderer nach Anspruch 7,
**dadurch gekennzeichnet, dass**
ein maximaler Kippwinkel der Trageinheit (4, 4', 46, 46', 76) durch eine entsprechende Ausgestaltung der Führungmittel (12, 20, 22, 56, 58, 78) vorgebbar ist.

9. Sortierförderer nach Anspruche 7 oder 8,
**dadurch gekennzeichnet, dass**
der Hebelarm (16, 16', 50, 50', 70) auskragende topfförmige Nocken (24, 24', 26, 26', 64, 66, 86) aufweist und mittels dieser Nocken (24, 24', 26, 26', 64, 66, 86) in einer im wesentlichen senkrecht verlaufenden Führungbahn (20, 22, 56, 58, 78) geführt ist, wobei die Grund- und Endposition durch jeweils eine von der Führungsbahn (20, 22, 56, 58, 78) seitlich abzweigende Aufnahme (32, 40, 60, 62, 80, 82) realisiert ist.

10. Sortierförderer nach einem der Ansprüche 7 bis 9,
**dadurch gekennzeichnet, dass**
ein die Trageinheit (4, 4', 46, 46', 76) kippender Hebelarm (16, 16', 50, 50', 70) die Trageinheit (4, 4', 46, 46', 76) bereits mit Beginn der Entriegelungsbewegung so verschwenkt, dass eine Entriegelungsbeweung des jeweils anderen Hebelarms (16, 16', 50, 50', 70) blockiert ist.

11. Sortierförderer nach Anspruch 10,
**dadurch gekennzeichnet, dass**
die Hebelarme (16, 16', 50, 50', 70) mittels jeweils eines in Einsteuerposition führbaren Einsteuergliedes in die Kulisse (28, 28') einsteuerbar sind, wobei die Einsteuerglieder - in Förderrichtung gesehen - geringfügig versetzt zueinander angeordnet sind.

12. Sortierförderer nach einem der Ansprüche 1 bis 11,
**dadurch gekennzeichnet, dass**
der Hebelarm (16, 16', 50, 50', 70) zweiteilig abgebaut ist und einen Hüllkörper (72) und einen Auslenkhebel (74) aufweist, wobei der Hüllkörper (72) auf Gleitsitz an der Trageinheit (4, 4', 46, 46', 76) angreift und im wesentlich nur in Hubrichtung (18, 65) beweglich ist und der Auslenkhebel (74) im wesentlichen parallel im Hüllkörper (72) verlaufend angeordnet ist und mit seinem der Trageinheit (4, 4', 46, 46', 76) zugewandten oberen Ende gelenkgelagert mit dem Hüllkörper (72) verbunden ist und mit seinem entgegengesetzten unteren Ende in die Kulisse (28, 28') einsteuerbar ist.

13. Sortierförderer nach Anspruch 12,
**dadurch gekennzeichnet, dass**
eine Kipp- und Arretierbewegung der Ablageschale (6, 6', 44, 44') erzielt ist, indem das untere Ende des Auslenkhebels (74) zur Lösung der arretierten Grundposition innerhalb der Abmessungen des Hüllkörpers (72) in eine erste Schwenkrichtung (36), d.h. in eine Richtung im wesentlichen senkrecht zur Hubrichtung (18, 65) orientiert, schwenkbar ist, zur Erzielung der Kippbewegung in Hubrichtung (18, 65) bewegbar ist und zur Arretierung der gekippten Endposition in einer zweiten Schwenkrichtung (38), die antiparallel zur ersten Schwenkrichtung (36) orientiert ist, schwenkbar ist.

14. Sortierförderer nach Anspruch 12 oder 13,
**dadurch gekennzeichnet, dass**
das Basismodul (84) und der Auslenkhebel (74) zueinander korrespondierende Nocken (86) und Aufnahmen (88) für die Nocken (86) aufweisen, wobei die Nocken (86) und die Aufnahmen (88) jeweils hintereinanderliegend in Hubrichtung (18) angeordnet sind.

15. Sortierförderer nach Anspruch 14,
**dadurch gekennzeichnet, dass**
ein Anschlag (90) zur Begrenzung der Kippbewegung für den Hüllkörper (72) und/oder die Trageinheit (76) vorgesehen sind.
